**Europäisches Patentamt**

**European Patent Office**

**Office européen des brevets**

(11) Veröffentlichungsnummer: **0 323 597 B1**

(12) **EUROPÄISCHE PATENTSCHRIFT**

(45) Veröffentlichungstag der Patentschrift: 26.09.90

(21) Anmeldenummer: **88121152.8**

(22) Anmeldetag: **16.12.88**

(51) Int. Cl.⁵: **F16D 27/10**

(54) Schleifringlose, elektromagnetische Schaltkupplung mit überlastfunktion.

(30) Priorität: **18.12.87 DE 3743138**

(43) Veröffentlichungstag der Anmeldung: **12.07.89 Patentblatt 89/28**

(45) Bekanntmachung des Hinweises auf die Patenterteilung: **26.09.90 Patentblatt 90/39**

(84) Benannte Vertragsstaaten: **AT BE CH DE ES FR GB GR IT LI LU NL SE**

(56) Entgegenhaltungen:
**DD-A- 72 192**
**DE-A- 2 459 274**
**US-A- 4 524 854**

**Patent Abstracts of Japan, vol. 9, no. 279 (M-427)(2002), 7. November; JP-A-60121327 (SHINKO DENKI K.K.) 28.06.1985**

(73) Patentinhaber: **Christian Mayr GmbH & Co. KG, Eichenstrasse 1, D-8951 Mauerstetten(DE)**

(72) Erfinder: **Mayr, Fritz, Dipl.-Ing. TU, Blütenring 89, D-8951 Mauerstetten(DE)**
Erfinder: **Vogt, Herbert, Dipl.-Ing. FH, Blütenring 81, D-8951 Mauerstetten(DE)**

(74) Vertreter: **Ruschke, Hans Edvard, Patentanwälte Dipl.-Ing. Olaf Ruschke Dipl.-Ing. Hans E. Ruschke Dipl.-Ing. Jürgen Rost Dipl.-Chem. Dr. U. Rotter Pienzenauerstrasse 2, D-8000 München 80(DE)**

ACTORUM AG

**Beschreibung**

Die vorliegende Erfindung betrifft eine schleifringlose, elektromagnetische Schaltkupplung mit Überlastfunktion nach dem Oberbegriff des Patentanspruches 1.

Eine derartige Kupplung wurde bereits von der Anmelderin unter der Bezeichnung EAS-Sm auf den Markt gebracht. Diese Kupplung weist eine Nabe auf, auf der der Druckflansch mittels eines einreihigen Kugellagers frei drehbar gelagert ist. Ein axial verschiebliches Schaltteil ist ebenfalls auf der Nabe angeordnet, greift einerseits mit radial ausgerichteten Klauen in entsprechende Nuten am Umfang der Nabe ein, und ist andererseits in der Lage, mit weiteren, axial ausgerichteten Klauen mit Rollen in Eingriff zu kommen, die im Druckflansch auf einem Radius verteilt angeordnet sind und von einer Stirnfläche dieses Druckflansches her zugänglich sind. Das Schaltteil wird von einer Federanordnung außer Eingriff mit dem Druckflansch gedruckt und kann von dem Elektromagneten, der mit der außen auf dem Druckflansch angeordneten Ankerscheibe zusammenwirkt, in den Druckflansch zurückgedrückt werden, um die Kupplung einzukuppeln. Zu diesem Zweck ist der gesamte, auf der Nabe mit Hilfe von Wälzlagern gelagerte Spulenträger zudem auch noch uber ein Gleitlager axial verschieblich, um die axialen Schaltbewegungen des Schaltteiles entgegen der Kraft der Druckfeder zu erzeugen.

Ein Nachteil bei der bisher bekannten Elektromagnetschaltkupplung bestand darin, daß die Veränderung des Überlastgrenzdrehmomentes in der Praxis nur über die angelegte Spannung erfolgen konnte, da ansonsten die Kupplung teilweise auseinandergebaut werden mußte, um Paßscheiben zwischenzulegen und dadurch den Luftspalt zu verändern, wonach die ganze Kupplung wieder neu abgestimmt werden mußte, was für den Betreiber einer solchen Kupplung zu aufwendig ist. Ein weiterer Nachteil bestand darin, daß das Magnetteil axial bewegt wird und sehr ungleiche Luftspalte entstanden. Da jedoch die Größe des Luftspaltes sich unmittelbar auf die Größe des zu übertragenden Grenzdrehmomentes auswirkt, konnte das Grenzdrehmoment bisher relativ weit streuen.

Im übrigen besteht der Wunsch, ein höheres Drehmoment bei gleichen oder geringeren Außenabmessungen zu erreichen, den Fertigungsaufwand zu verringern und eine einfache Anpassung der Kupplung an die Einsatzbedingungen vorzusehen, d.h. an die gewünschte Lebensdauer, Stoßfestigkeit und Spielfreiheit. Weiterhin soll eine Erweiterung des Anwendungsbereiches als elektromagnetisch schaltbare Kupplung mit abschaltender Überlastfunktion und fest eingestelltem Drehmoment erreicht werden: Bei der erfindungsgemäßen Kupplung ist es nämlich möglich, das Drehmoment über die angelegte Spannung und zusätzlich über den stufenlos einstellbaren Luftspalt zu regeln, was bisher bei Schaltkupplungen völlig unbekannt war, d.h. bisher war diese Einstellung für den Betreiber einer Schaltkupplung nur in relativ engen Grenzen über die Spannung möglich.

Durch die vorliegende Erfindung werden die oben dargestellten Nachteile vermieden, d.h. es wird u.a. erreicht, daß das Grenzdrehmoment sehr feinfühlig eingestellt werden kann, ohne daß die Kupplung auseinandergebaut werden muß. Darüber hinaus ergibt es einen gleichmäßigeren Luftspalt, da das Magnetteil axial festgehalten ist und nur die Ankerscheibe sich bei Überlast axial bewegt. Somit werden die axial bewegten Massen wesentlich verringert und es wird ein günstigeres Ausrastverhalten erreicht. Außerdem wurde die Drehmomentenübertragung über drei Bolzen, welche in beschichteten Buchsen (.z.B. PTFE) laufen, eine sehr spielarme Ausführung und eine verschleißfreie Möglichkeit der · Drehmomentenübertragung geschaffen.

Der Magnetkörper, der auf einer Buchse aus antiferromagnetischem bzw. unmagnetischem Material axial verschiebbar ist, kann über ein Gewinde axial zur Anker scheibe eingestellt werden. Somit kann feinfühlig und sehr gleichmäßig ein Luftspalt eingestellt werden. Durch das Axiallager erhält der Magnetkörper eine sehr gute Planlaufgenauigkeit, welche sich auf den Luftspalt auswirkt. Der Magnetkörper wird auf einer antiferromagnetischen Buchse geführt, um magnetische Streuflüsse zu verhindern und dadurch eine höhere magnetische Wirkung zu erzielen, welche ein höheres Drehmoment bewirkt.

Ein Ausführungsbeispiel der vorliegenden Erfindung wird unter Bezugnahme auf die beigefügten Zeichnungen beschrieben. Darin zeigt

Fig. 1 einen Schnitt durch eine erfindungsgemäße Kupplung;

Fig. 2 eine Einzelheit aus Fig. 1 zum Vergleich mit der in diesem Detail anderen Ausführungsform der Fig. 3; und

Fig. 3 eine alternative Ausführungsform der axial nachgiebigen, aber in Umfangsrichtung starren Verbindung zwischen der Ankerscheibe und dem Druckflansch.

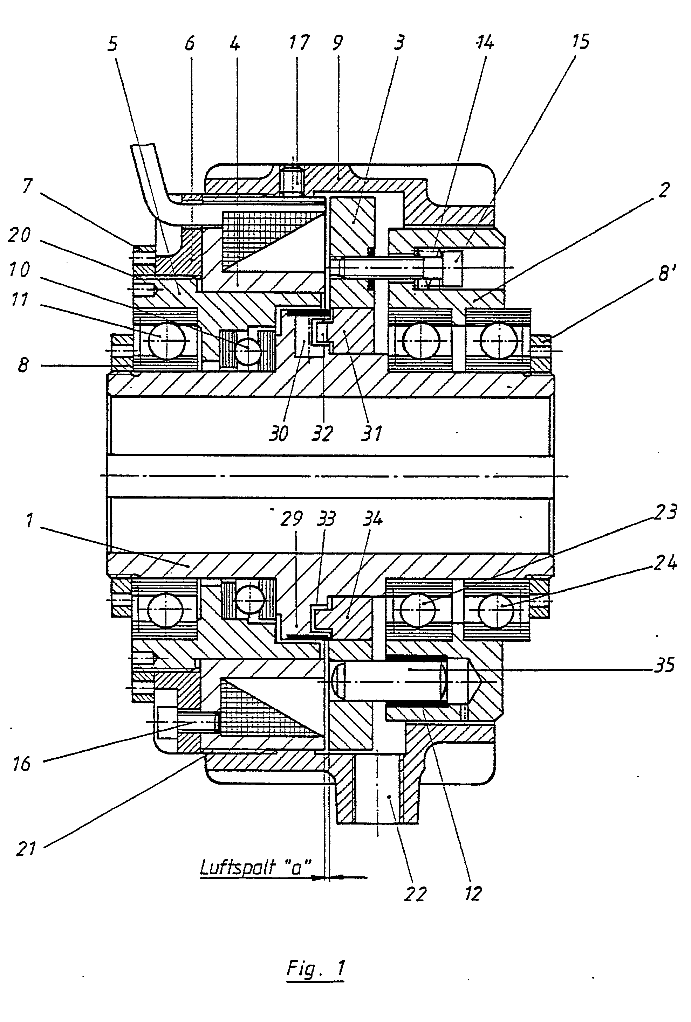

Im eingerasteten Zustand der Kupplung, der in der Fig. 1 gezeigt ist, wird das von einer nicht dargestellten Welle kommende Drehmoment auf die Nabe 1 übertragen und geht von dort auf einen etwa in der Mitte der Nabe vorgesehenen Umfangsflansch 29, in dem auf seinem Umfang verteilt in entsprechenden Ausnehmungen bzw. radialen Bohrungen Rollen 30 vorgesehen sind, in die ein Schaltteil 31 mit entsprechend ausgebildeten Senkungen (Kalotten/Ausfräsungen) 32 eingreifen kann. Zu diesem Zweck ist der Umfangsflansch 29 an seiner in Fig. 1 nach rechts weisenden Stirnfläche mit einer umlaufenden Nut 33 versehen, in die ein entsprechend geformter Ring 34 am Schaltteil 31 eingreift. Dieser Ring 34 ist - entsprechend den Positionen der Rollen 30 - mit Ausfräsungen versehen, die dann die vorgenannten Senkungen oder Kalotten 32 des Schaltteiles 31 ausbilden.

Das Schaltteil 31 ist mit der Ankerscheibe 3 fest verbunden und mit dieser in Axialrichtung bewebbar, und zwar in Abhängigkeit von den auf die Ankerscheibe 3 wirkenden Magnet- oder Federkräften, auf die noch näher eingegangen wird. Das von den Rollen 30 über die Senkungen 32 auf das Schaltteil 31 übertragene Drehmoment geht auf die damit starr verbundene Ankerscheibe 3 über, die ihrerseits axial verschieblich, jedoch in Umfangsrichtung starr mit dem Druckflansch 2 verbunden ist, und zwar mit Hilfe von Bolzen 35 bzw. federbeaufschlagten Zylinderkopfschrauben 15, die in axial verlaufenden Bohrungen im Druckflansch 2 angeordnet sind und so federbeaufschlagt sind, daß die Ankerscheibe bei stromlosem Magneten von diesem wegbewegt wird, d.h., daß die Kupplung dann ausrastet. Die Bolzen 35 sind beispielsweise auf dem Umfang verteilt (z.B. drei Stück) angeordnet und gleiten in einer Buchse 12 aus geeignetem Material (z.B. PTFE) im Druckflansch 2. Die Bolzen 35 dienen ausschließlich zur Drehmomentübertragung zwischen der Ankerscheibe 3 und dem Druckflansch 2, an dem ein nicht dargestelltes Abtriebselement, z.B. ein Kettenrad oder dergl. außen befestigt werden kann. Dieses Abtriebselement ist also je nach dem Schaltzustand der Kupplung mit der Nabe 1 starr verbunden oder dieser gegenüber frei drehbar.

Der Druckflansch 2 ist über zwei nebeneinander angeordnete einreihige Kugellager 23, 24 gegenüber der Nabe abgestützt. Diese Kugellager sind durch einen Einstellmutter 8′ auf der Nabe 1 festgelegt. Die Ankerscheibe 3 bzw. der radial einwärts davon angeordnete und damit etwa durch Hartlötung verbundene Schaltteil 31 ist auf einem Absatz der Nabe 1 gleitend gelagert, um der Ankersscheibe und dem Schaltteil eine gute Führung bei der Axialverschiebung aufgrund des Magnetfeldes zu geben, da letzteres häufig etwas exzentrisch wirken und somit ein Kippmoment erzeugen kann, was die Axialverschiebung ansonsten stören könnte.

Der Spulenträger besteht aus dem ringförmigen Magnetteil 4, der stufig ausgebildeten Buchse 5 und dem auf den größeren Durchmesser der Buchse aufgeschraubten Flanschring 6, der im Betrieb durch eine Kontermutter 7 gesichert ist. Der ringförmige Magnetteil 4 sitzt dicht passend aber gleitend verschieblich auf der Buchse 5 aus unmagnetischem Material, z.B. aus Aluminium. Diese Buchse 5 ist über ein Axiallager 10 und ein Radiallager (einreihiges Kugellager 11) gegenüber der Nabe abgestützt, wobei das Radiallager 11 durch eine Einstellmutter 8 auf der Nabe festgelegt ist. Durch diese Einstellmutter 8 kann die Vorspannung des Axiallagers 10 sehr genau eingestellt bzw. völlig herausgenommen werden, so daß der Spulenträger mit dem Magnetteil 4 eine genau definierte Axiallage in Bezug auf die Nabe 1 und die anderen, darauf angeordneten Bauteile wie die Ankerscheibe hat.

Die Buchse 5 ist auf ihrem vorderen, d.h. in Fig. 1 im linken Abschnitt mit einem vergrößertem Durchmesser mit einem Gewinde 20 versehen, welches letztlich zur axialen Verstellung des Magnetteiles 4 mit dem Elektromagneten im Verhältnis zu den übrigen Teilen des Spulenträgers dient. Auf diesem Gewinde 20 sitzt der ebenfalls innen mit einem entsprechenden Gewinde versehene Aluminium-Flanschring 6, der mit dem Magnetteil 4 fest verbunden ist, etwa durch Schrauben 16. Auch weist dieser Flanschring 6 eine Bohrung zum Herausführen des Stromversorgungskabels des Elektromagneten auf. Auf dem vordersten Ende dieses Gewindes 20 sitzt noch eine Nachstell-Kontermutter 7, die vor dem Nachstellen des Flanschringes 6 und damit des Magnetteiles 4 zur Einstellung des Luftspaltes "a" gelöst werden muß. Um dann den Magnetteil 4 vorzuschieben, wird die Buchse 5 bei festgehaltenem Flanschring 6 bzw. Magnetteil 4 verdreht, so daß letztere entsprechend der Steigung des Gewindes 20 axial verschoben werden. Nachdem der gewünschte Luftspalt "a" zwischen der Ankerscheibe 3 und dem Magnetteil 4 durch eine entsprechende Drehung der Buchse 5 eingestellt worden ist, wird der Flanschring 6 durch die Kontermutter 7 wieder fest mit der Buchse 5 verbunden, so daß die ganze Spulenträgereinheit aus Magnetteil 4, Buchse 5 und Flanschring 6 sowie Nachstellmutter 7 eine in Axialrichtung relativ zur Nabe 1 feststehende Einheit bildet.

Der Magnetteil 4 ist auf seinem Außenumfang mit einem Gewinde 21 versehen, auf welches ein entsprechendes Gewinde in einem abgestuft hülsenförmigen Abdeckgehäuse 9 aufgeschraubt werden kann, um den äußeren Abschluß der Kupplung zu bilden. Das Abdeckgehäuse 9 wird dabei durch eine radial verlaufende Madenschraube 17 gegen den Magnetteil 4 gesichert und weist im Verstellbereich der Ankerscheibe 3 eine radial verlaufende Gewindebohrung 22 auf, in die ein Näherungsinitiator (kapazitiver oder induktiver Näherungsschalter) eingeschraubt werden kann, um die Stellung der Ankerscheibe 3 und somit den Schalt zustand der Kupplung abzufühlen.

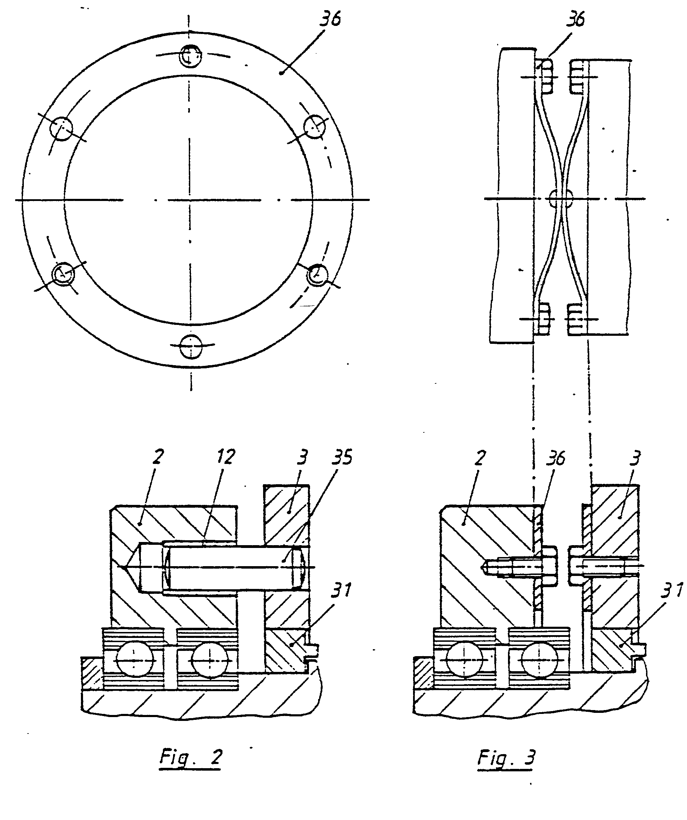

Es können beispielsweise sechs Rollen 30 auf dem Umfang des Flansches 29 der Nabe 1 ungleichmäßig verteilt angeordnet sein, so daß das Einrasten synchron nach 360° erfolgt, d.h. An- und Abtriebselemente haben im gekuppelten Zustand jeweils genau die gleiche Winkelstellung zueinander. Bei einer eventuell geforderten höheren Lebensdauer der Kupplung können 24 derartiger Rollen 30 gleichmäßig auf dem Umfang verteilt werden, wobei eine Synchronisation des Einrastens - falls erforderlich - durch zusätzliche (nicht dargestellt) Synchronisationsstifte ·erreicht wird, die im Bereich des Luftspaltes zwischen dem Umfangsflansch 29 und dem Schaltteil 31 radial vorstehen und um die Nabe 1 herum ungleichmäßig verteilt sind, so daß die Kupplung wiederum nur in einer bestimmten Relativstellung zwischen der Nabe 1 und dem Druckflansch 2 einrasten kann. Wenn eine absolute Spielfreiheit der Drehmomentübertragung zwischen der Ankerscheibe 3 und dem Druckflansch 2 gefordert ist, können die Bolzen 35 durch scheibenförmige Ringfedern ersetzt werden, wie sie etwa in Fig. 3 herausgezeichnet sind. Es handelt sich um eine federnde Ringscheibe, die auf dem Umfang abwechselnd mit der Ankerscheibe 3 und einer weiteren Ringfeder auf dem Druckflansch 2 verbunden ist, so daß eine spielfreie Drehmomentübertragung bei einer begrenzten axialen Verschiebbarkeit des Druckflansches bzw. der Ankerscheibe zueinander erreicht wird.

Die Ankerscheibe 3 besteht aus Weicheisen und ist mit dem Schaltteil 31 aus lufthärtendem Stahl durch Hartlötung verbunden, so daß bei der Abkühlung nach dem Löten das Schaltteil 31 hart wird. Dies trägt zur Fertigungsvereinfachung bei.

Die Ankerscheibe 3 ist innen durch die Nabe 1 und im übrigen durch die Bolzen 35 zum Auffangen des Kippmomentes geführt und zentriert, welches durch den bisweilen exzentrischen Zug des Magneten erzeugt werden kann.

Durch Einbetten des Magnetkörpers in antimagnetisches Material (Flanschring 6, Buchse 5, Abdeckgehäuse 9) wird der Streufluß stark eingeschränkt. Außerdem hat das den Magnetkörper umgebende Material (z.B. Aluminium) eine sehr große Wärmleitfähigkeit, wodurch eine Erhöhung der Ampere-Windungszahl und damit einhergehend eine Erhöhung des übertragbaren Drehmomentes möglich ist.

Eine stabile und spielfreie Lagerung des Magnetteiles durch eine genaue Einstellung des Axiallagers 10 mit Hilfe der Einstellmutter 8 ermöglicht eine genaue Einstellung auch sehr kleiner Luftspalte an der Kupplung und damit eine sehr feinfühlige Einstellung der Kupplung in Bezug auf das übertragbare Grenzdrehmoment, welches einerseits durch die an dem Elektromagneten anliegende Spannung, und andererseits durch den in Fig. 1 dargestellt einstellbaren Luftspalt "a" bestimmt wird.

Die in der Figur 1 linke Position der Ankerscheibe 3, die im Interesse eines genauen Luftspaltes "a" möglichst gut reproduzierbar sein muß, wird durch den Eingriff zwischen den Senkungen 32 und den Rollen 30 bestimmt.

Bezugszeichenliste

1 Nabe
2 Druckflansch
3 Ankerscheibe
4 Magnetteil/Spulenträger
5 Buchse
6 Flanschring
7 Nachstellmutter/Kontermutter
8 8′ Einstellmuttern
9 Abdeckgehäuse
10 Axiallager
11 Radiallager
12 Buchse für Bolzen 35
13
14 Schraubenfedern
15 Zylinderkopfschrauben
16 Halteschrauben/Magnetteil
17 Madenschraube
18
19
20 Gewinde auf Buchse 5
21 Gewinde auf Magnetteil 4
22 Gewindebohrung im Abdeckgehäuse
23 Kugellager
24 Kugellager
25
26
27
28
29 Umfangsflansch der Nabe 1
30 Rollen
31 Schaltteil
32 Senkungen am Schaltteil
33 Umlaufende Nut
34 Ring
35 Bolzen
36 scheibenförmige Ringfeder

## Patentansprüche

1. Schleifringlose, elektromagnetische Schaltkupplung mit Überlastfunktion, mit
- einer von einer Welle angetriebenen Nabe (1),
- einem darauf gelagerten Spulenträger mit einem Elektromagneten, der in Umfangsrichtung feststeht
- einem ebenfalls darauf drehbar gelagerten, in Axialrichtung relativ dazu unverschieblichen, als Abtriebselement vorgesehenen Druckflansch (2), der mit der Ankerscheibe (3) des Elektromagneten in Umfangsrichtung starr verbunden ist,
- und mit einem im Drehmomentenfluß zwischen der Nabe (1) und dem Druckflansch (2) angeordneten, von der über die Spannung einstellbaren Magnetkraft des Elektromagneten einrückbaren Schaltteil (31), durch das der Druckflansch (2) mit der Nabe (1) kuppelbar ist, dadurch gekennzeichnet, daß der aus einem Magnetteil (4), einer Buchse (5) und einem Flanschring (6) bestehende Spulenträger gegenüber der Nabe (1) axial unverschieblich gelagert und die axiale Position des Magnetteiles (4) auf der Buchse (5) über ein Gewinde (20) einstellbar ist, daß die Ankerscheibe (3) relativ zum Druckflansch (2) axial verschieblich und mit dem Schaltteil (31) starr verbunden ist, und daß das Schaltteil (31) zur Drehmomentenübertragung in Ausnehmungen in der Nabe (1) einrückbar ist.

2. Überlastkupplung nach Anspruch 1, dadurch gekennzeichnet, daß das Gewinde (20) auf der Buchse (5) vorgesehen ist, wobei der mit einem Innengewinde versehene Flanschring (6) auf der Buchse (5) angeordnet und mit dem Magnetteil (4) über Schrauben (16) fest verbunden ist.

3. Überlastkupplung nach Anspruch 2, dadurch gekennzeichnet, daß der Flanschring (6) durch eine Kontermutter (7) auf dem Gewinde (20) gesichert ist.

4. Überlastkupplung nach Anspruch 1, 2 oder 3, dadurch gekennzeichnet, daß die Ankerscheibe (3) relativ zum Druckflansch (2) durch auf dem Umfang verteilte, axial sich erstreckende Führungsbolzen (35) verschieblich ist, die in entsprechenden Bohrungen in der Ankerscheibe (3) und im Druckflansch (2) sitzen (Fig. 2).

5. Überlastkupplung nach Anspruch 1, 2 oder 3, dadurch gekennzeichnet, daß die Ankerscheibe relativ zum Druckflansch (2) durch scheibenförmige Ringfedern (36) axial verschieblich ist, die auf ihrem Umfang abwechselnd mit dem Druckflansch (2) bzw. der Ankerscheibe (3) verbunden sind (Fig. 3).

6. Überlastkupplung nach einem der voranstehenden Ansprüche, dadurch gekennzeichnet, daß der Spulenträger auf der Nabe (1) über ein Radiallager (11) und ein Axiallager (10) gelagert ist, wobei die Vorspannung des Axiallagers durch eine auf der Nabe (1) vorgesehene Einstellmutter (8) einstellbar oder herausnehmbar ist.

7. Überlastkupplung nach einem der voranstehenden Ansprüche, dadurch gekennzeichnet, daß die Buchse (5) und der Flanschring (6) aus einem antiferromagnetischen bzw. unmagnetischen Material (z.B. Aluminium) hergestellt sind.

8. Überlastkupplung nach einem der voranstehenden Ansprüche, dadurch gekennzeichnet, daß ein hülsenartiges Abdeckgehäuse (9) auf dem Außenumfang des Magnetkörpers (4) aufschraubbar ist.

9. Überlastkupplung nach Anspruch 8, dadurch gekennzeichnet, daß eine radiale Gewindebohrung (22) im Abdeckgehäuse im axialen Verstellbereich der Ankerscheibe (3) zur Aufnahme eines Näherungsinitiators vorgesehen ist.

10. Überlastkupplung nach einem der voranstehenden Ansprüche, dadurch gekennzeichnet, daß das Schaltteil (31) aus einem lufthärtenden Stahl besteht und durch Hartlötung mit der aus Weicheisen bestehenden Ankerscheibe (3) verbunden ist.

## Claims

1. Slip ring-less, electromagnetic switching clutch with overload function, having
   — a hub (1) driven by a shaft,
   — a coil carrier mounted thereon, with an electromagnet which is fixed in the circumferential direction,
   — a pressure flange (2) provided as a driven element, which is also mounted rotatably on said shaft and fixed in the axial direction relative thereto, and which is rigidly connected to the armature disc (3) of the electromagnet in the circumferential direction,
   — and a switching part (31) mounted in the torque flux between the hub (1) and the pressure flange (2), and engageable by the magnetic force of the electromagnet which is adjustable via the voltage, by which switching part the pressure flange (2) can be coupled with the hub (1), characterised in that the coil carrier consisting of a magnet part (4), a bushing (5) and a flange ring (6) is mounted axially immovably relative to the hub (1) and the axial position of the magnet part (4) is adjustable on the bushing (5) via a thread (20), in that the armature disc (3) is connected axially displaceably relative to the pressure flange (2) and rigidly to the switching part (31), and in that the switching part (31) is engageable in recesses in the hub (1) in order to transmit torque.

2. Overload clutch according to claim 1, characterised in that the thread (20) is provided on the bushing (5), the flange ring (6) provided with an inner thread being mounted on the bushing (5) and fixed to the magnet part (4) via screws (16).

3. Overload clutch according to claim 2, characterised in that the flange ring (6) is fixed on the thread (20) by a lock nut (7).

4. Overload clutch according to claim 1, 2 or 3, characterised in that the armature disc (3) is displaceable relative to the pressure flange (2) by guide bolts (35) extending axially and distributed around the circumference, and which rest in corresponding bores in the armature disc (3) and in the pressure flange (2) (Fig. 2).

5. Overload clutch according to claim 1, 2 or 3, characterised in that the armature disc is axially displaceable relative to the pressure flange (2) by disc shaped annular springs (36), which are connected on their circumference alternately to the pressure flange (2) or the armature disc (3) (Fig. 3).

6. Overload clutch according to one of the preceding claims, characterised in that the coil carrier is mounted on the hub (1) via a radial bearing (11) and an axial bearing (10), the prestressing of the axial bearing being removable in an adjustable manner by a setting nut (8) provided on the hub (1).

7. Overload clutch according to one of the preceding claims, characterised in that the bushing (5) and the flange ring (6) are manufactured from an anti-ferromagnetic or nonmagnetic material (e.g. aluminium).

8. Overload clutch according to one of the preceding claims, characterised in that a sleeve-like covering housing (9) may be screwed on to the outer circumference of the magnet body (4).

9. Overload clutch according to claim 8, characterised in that a radial threaded bore (22) is provided in the covering housing in the axial adjustment region of the armature disc (3) for receiving an approach initiator.

10. Overload clutch according to one of the preceding claims, characterised in that the switching part (31) consists of an air-hardened steel and is connected to the armature disc (3) consisting of soft iron by hard solder.

## Revendications

1. Embrayage électromagnétique dépourvu de bague glissante, à une fonction de limitation de couple, avec
   — un moyeu (1) entraîné par un arbre,
   — un porte-bobine disposé sur celui-ci avec un électroaimant qui est fixe en direction périphérique,
   — un plateau de pression (2), prévu comme élément mené, disposé de même sur celui-ci de façon à pouvoir tourner, immobile en direction axiale par rapport à celui-ci, et qui est lié de façon fixe en direction périphérique au disque d'ancrage (3) de l'électroaimant,
   — et avec une pièce de commande (31) disposée dans le flux de couple entre le moyeu (1) et le plateau de pression (2), embrayable par la force magnétique de l'électroaimant qui est réglable par la tension, pièce de commande par laquelle le plateau de pression (2) peut être couplé au moyeu (1), caractérisé en ce que le porte-bobine qui consiste en une pièce magnétique (4), un manchon (5) et un collier (6) est disposé de façon immobile en direction axiale par rapport au moyeu (1) et en ce que la position axiale de la pièce magnétique (4) sur le manchon (5) peut être réglée par l'intermédiaire d'un filetage (20), en ce que le disque d'ancrage (3) est déplaçable axialement par rapport au plateau de pression (2) et est lié de façon fixe à la pièce de commande (31), et en ce que la pièce de commande (3) peut être embrayée dans des évidements du moyeu (1) pour transmettre le couple.

2. Embrayage à limitation de couple selon la revendication, caractérisé en ce que le filetage (20) est prévu sur le manchon (5), le collier (6) muni d'un filetage interne étant disposé sur le manchon (5) et étant lié de façon fixe à la pièce magnétique (4) par l'intermédiaire de vis (16).

3. Embrayage à limitation de couple selon la revendication 2, caractérisé en ce que le collier (6) est fixé sur le filetage (20) par un contre-écrou (7).

4. Embrayage à limitation de couple selon la revendication 1, 2 ou 3, caractérisé en ce que le disque d'ancrage (3) est déplaçable par rapport au plateau de pression (2) par l'intermédiaire de boulons de guidage (35) qui s'étendent axialement, qui sont répartis sur la périphérie et qui reposent dans des alésages correspondants du disque d'ancrage (3) et du plateau de pression (2) (Figure 2).

5. Embrayage à limitation de couple selon la revendication 1, 2 ou 3, caractérisé en ce que le disque d'ancrage est déplaçable axialement par rapport au plateau de pression (2) par l'intermédiaire de rondelles-ressorts (36) en forme de disques qui sont reliées tour à tour sur leur périphérie au plateau de pression (2) et au disque d'encrage (3) (Figure 3).

6. Embrayage à limitation de couple selon l'une des revendications précédentes, caractérisé en ce que le porte-bobine est disposé sur le moyeu (1) par l'intermédiaire d'un palier radial (11) et d'un palier axial (10), la précontrainte du palier axial pouvant être supprimée de façon réglable par un écrou de réglage (8) prévu sur le moyeu (1).

7. Embrayage à limitation de couple selon l'une des revendications précédentes, caractérisé en ce que le manchon (5) et le collier (6) sont constitués par un matériau antiferromagnétique ou non magnétique (par exemple aluminium).

8. Embrayage à limitation de couple selon l'une des revendications précédentes, caractérisé en ce qu'un carter formant couvercle (9) en forme de gaine peut être vissé sur la périphérie externe du corps magnétique (4).

9. Embrayage à limitation de couple selon la revendication 8, caractérisé en ce qu'il est prévu un alésage fileté radial (22) dans le carter formant couvercle dans le domaine de déplacement axial du disque d'ancrage (3) pour recevoir un détecteur de proximité.

10. Embrayage à limitation de couple selon l'une des revendications précédentes, caractérisé en ce que la pièce de commande (31) consiste en un acier autotrempant et est liée par brasage fort au disque d'ancrage (3) qui consiste en fer doux.

_Fig. 1_

Luftspalt "a"

36

36

2 12 3 35

2 36 3

31

31

Fig. 2

Fig. 3